Europäisches Patentamt

European Patent Office

Office européen des brevets

(19)

(11) Publication number: **0 293 074**
**A2**

(12) **EUROPEAN PATENT APPLICATION**

(21) Application number: **88303214.6**

(22) Date of filing: **11.04.88**

(51) Int. Cl.4: **C08J 5/18 , C08L 23/08 , C08L 23/20 , C08L 23/10 , //(C08L23/08,23:10,23:20)**

(30) Priority: **27.05.87 US 54569**

(43) Date of publication of application:
**30.11.88 Bulletin 88/48**

(84) Designated Contracting States:
**AT BE CH DE ES FR GB GR IT LI LU NL SE**

(71) Applicant: **SHELL OIL COMPANY**
**900, Louisiana**
**Houston Texas 77001(US)**

Applicant: **MITSUI PETROCHEMICAL INDUSTRIES, LTD.**
**2-5, Kasumigaseki 3-chome Chiyoda-ku Tokyo 100(JP)**

(72) Inventor: **Hwo, Charles C.**
**2710 Sugarwood Drive**
**Sugarland Texas 77478(US)**

(74) Representative: **Myerscough, Philip Boyd et al**
**J.A.Kemp & Co. 14, South Square Gray's Inn**
**London, WC1R 5EU(GB)**

(54) **Polymer blend for packaging film, sheet or laminate.**

(57) Polymer blends comprising a major proportion of an ethylene-carboxylic acid polymer, and minor proportions of a butene-1 polymer and a propylene polymer can be used to provide heat sealable film or sheet or laminar structures capable of forming peelable seals.

EP 0 293 074 A2

## POLYMER BLEND FOR PACKAGING FILM, SHEET OR LAMINATE

The present invention relates to a polymer blend which can be used to provide a heat sealable wrapping or packaging film or sheet (for ease of reference mention will subsequently be made only to film) which is capable of forming a peelable seal. The seal is achievable either between two films of this kind, or between one film of this kind and a polypropylene packaging film without the need for an adhesive.

A peelable seal is defined to be the seal between two films produced by heat sealing or impulse sealing, the seal thus formed having the property of being able to open in the original plane of joining of the two films by the action of a pulling force, without wrenching off or tearing occurring in the material of the two films used to make up the seal. For the purposes of the present invention, the peelable seal must possess a mechanical resistance sufficient to maintain the integrity and the tight-seal properties of a packaging or wrapping round an article during storage and transport until such time as the packaging or wrapping is opened by the user of the article. The mechanical resistance of the peelable seal must be low enough to permit ready manual opening of the joint, i.e. without the use of any auxiliary instrument.

Many thermoplastic materials have been employed in the manufacture of films capable of forming peelable seals. For example, US-A-4,189,159 discloses a blend for producing a peelable heat seal comprising (1) 50 to 90 percent by weight of a copolymer of 80 to 96 percent by weight ethylene and 4 to 20 percent by weight of an ethylenically unsaturated ester, and (2) 10 to 50 percent by weight of a crystalline isotactic polybutylene. While capable of forming a peel seal, film of this blend will not bond to polypropylene without an adhesive although it will bond to high density polyethylene (HDPE) without the use of adhesive.

US-A-3,900,534 discloses thermoplastic shrink films with good heat seal characteristics and good optical properties, but does not address the need for a peel seal film.

US-A-3,879,492 discloses blends of polybutylene + styrene-butadiene copolymer + low density polyethylene (LDPE) + HDPE + polyisobutylene.

US-A-4,539,263 discloses peel seals based on blends of comonomers and propylene/$\alpha$-olefin copolymer, but does not provide disclosure directed to polybutylenes.

EP-A-213698 discloses blends of an ethylenic polymer, a butene-1 polymer and a propylene polymer, the amount of the butene-1 polymer being at least 50 percent by weight.

Various other references teach heat sealable films capable of forming peel seals, such as US-A-4,550,141, US-A-4,539,263 and US-A-4,414,053. However, none of these references discloses a blend, suitable for forming an intimate packaging film structure, as now disclosed herein.

There has been a long felt need for a wrapping or packaging material having easy peelability at the seal and yet which will bond to a substrate without the aid of an adhesive.

According to the invention there is provided a polymer blend suitable for use in packaging film or sheet, which blend comprises

(i) from 50 to 90 percent by weight of an ethylene-carboxylic acid copolymer;

(ii) from 5 to 25 percent by weight of a butene-1 polymer; and

(iii) from 5 to 45 percent by weight of a propylene polymer, the percentages being based on the combined weight of (i), (ii) and (iii).

(In this specification the term "polymer" is used to denote both homopolymers and copolymers).

In accordance with the invention it is not necessary to employ a separate tie layer adhesive and the equipment needed to dispose a tie layer adhesive on a substrate is no longer necessary. The invention recognises that conventional multilayer peelable seal films or sheets are comprised of substrates and peelable sealants which are generally not chemically compatible, whereas the present invention creates chemically compatible blends and peelable sealants. The invention avoids delamination layers when sealed layers are pulled apart. In some embodiments a tie adhesive can be utilized to bind incompatible substrates with sealants without the need for additional equipment to bind the adhesive between the sealant and the substrate. The invention reduces manufacturing costs for producing peelable seals.

The invention also provides a packaging film or sheet which is capable of forming a peel seal and which is of a blend of the invention. The invention further provides a laminar structure comprising a substrate to which is bonded, as by extrusion lamination, the packaging film or sheet of the invention. Using such films, sheets or laminates it is possible to form peel seals which have a nearly constant peel strength over an extended temperature range. Packages can be formed, as more consistent finished products, having seals of predictable and constant peel strength, despite inevitable variations in the heat seal temperatures used in forming the packages.

Thus, in accordance with the invention, it has been found that certain properties, including the peel seal characteristics of wrapping films or sheets, may be improved by fabricating films or sheets from blends having a major content of an ethylene-carboxylic acid copolymer (>50 w%) (usually 50 to 90 weight percent, preferably 55 to 70 weight percent), a minor content of butene-1 polymer (<25 w%) (usually 5 to 25 weight percent, preferably 10 to 20 weight percent) and a propylene polymer in the amount of 5 to 45 weight percent (preferably 10 to 35 weight percent). Such films or sheets can be bonded to a substrate by coextrusion or extrusion lamination to form a laminate.

A particularly preferred blend of the invention is one which contains 65 percent by weight of the ethylene-carboxylic acid copolymer, about 15 percent by weight of the butene-1 polymer, and about 20 percent by weight of the propylene polymer.

The ethylene-carboxylic acid polymer is a copolymer of ethylene and an ethylenically unsaturated carboxylic acid, preferably an acid of the formula $CHR = CRCOOH$ where each R, which may be the same or different, is hydrogen or alkyl, preferably $C_1$-$C_4$ alkyl. Suitable such acids include acrylic acid (AA), methyl acrylic acid (MAA), ethyl acrylic acid (EAA), butyl acrylic acid (BAA) and propyl acrylic acid (PAA).

The butene-1 polymer can be a butene-1 homopolymer and/or a copolymer of butene-1 with another olefin such as ethylene, propylene and alpha olefins having from 5 to 8 carbon atoms. The butene-1 polymer preferably is a homopolymer having a melt index of from 2 to 200. The butene-1 polymer can be stabilised with known stabilisers, such as "IRGANOX" (R.T.M.) 1010. Commercially available butene-1 polymers that can be used in accordance with the invention are PB 1560, PB 1520 and PB 0110 of Shell Chemical Company, Houston, Texas, USA.

The propylene polymer can similarly be a homopolymer or copolymer. Propylene copolymers will generally contain at least 25 weight percent of units derived from propylene.

The term "high density polyethylene" refers to a resin, such as DuPont Alathon® 7815 polyethylene, with a melt index of 0.25 to 6, and in particular about 0.45, and a density of from 0.944 g/cm³ to 0.955 g/cm³, and preferably 0.95 g/cm³.

The term "tie layer adhesive" refers to an adhesive which may be applied between a substrate, such as nylon or polycarbonate, and a layer of peelable sealant to bind the peelable sealant to the substrate.

The term "extrudate" refers to the substance which has been forced through the die of an extruder.

The term "peel sealability" refers to the sealed area of a film where the two parts are joined together. A film's peel sealability is measured by the degree of strength applied; such sealability can be measured by ASTM tensile strength testing method D-882.

The butene-1 polymer is preferably of a film-forming grade, and can, for example, be obtained commercially from the Shell Chemical Company or prepared as described in US-A-3,362,940. Desirably the polybutylene has a melt index of 0.1 to 500, preferably of 0.4 to 7, more preferably of 1 to 4 and most preferably of 2 ± 0.5.

The propylene polymer improves the processability of the blend.

The blend of the invention may be formed into an oriented, preferably biaxially oriented, or unoriented film or sheet by casting or film blowing. After fabrication the film or sheet can be heat sealed by sealing jaws at a preset temperature, pressure and dwell. The seal strength is tested by an Instron tensile tester at 25.4 cm/min (10"/min) crosshead speed. Maximum strength on a 2.54 cm (one inch) width strip was designated as peel seal strength.

These manufacturing techniques apply to film, but the blends can be used to form sheeting. Film refers to shaped plastics that are comparatively thin and have a maximum thickness of 0.025 mm (0.01 inch). Sheeting refers to shaped plastics having a thickness greater than 0.025 mm (0.010 inches).

The present invention also provides a laminar structure comprising a substrate to which is bonded a coating layer of the blend of the invention or a film or sheet of the blend. The peel seal coat, which consists of the blend of the invention, can be coated or laminated onto the substrate. The substrate can be, for example, of nylon, high density polyethylene, aluminium foil, polycarbonate, polystyrene, polyurethane, polyvinyl chloride, polyester, polyacryonitrile or polypropylene. Except for high density polyethylene, nylon and the aluminium foil, the remaining substrates may require a tie layer adhesive to bond the blend layer to the substrate.

The laminated structure can be made by making two separate films that are then laminated. The individual films can be made by, for example, film blowing (melt extrusion with a circular die) or the casting method (a flat die-melt extrusion process). The films can be laminated by any suitable means, such as heat lamination. The laminated structure can also be made by coextrusion techniques, such as those described in US-A-2,480,998.

Melt extrusion with a flat die (casting) may be accomplished for thermoplastic polymers by using a flat die or slot die. The extrusion process starts with a polymer in a form that can be fed continuously into an extruder by means of a screw or pneumatic tube. Sometimes the polymers are combined with materials

3

such as plasticizers, lubricants, stabilizers and colorants by means of, for example, Banbury mixers. The resulting mix is extruded through rod shaped dies and chipped into pellets. Pelletized polymer is fed into a screw conveyer into the end of a screw-type extruder and is heated and made into viscous fluid in a cylinder by means of a revolving, helical screw. The sheet emitting from the die is quenched on a temperature controlled chill roll. Finished films may be subject to a two-way stretching using continuous tenter-frame operations in biaxial orientation.

## EXAMPLE 1

Polybutylene PB8340 ("DURAFLEX" obtainable from Shell Chemical Company) having a melt index of about 4.0 dg/min (ASTM method D-1238 condition "E") and a density of 0.901 g/cm$^3$ was dry blended in a tumbler mixture with 75 w% of ethylene-acrylic acid copolymer (EAA) (Dow Primacor 1430) and 5 w% polypropylene (Shell PP5820) with a melt flow of 12. The resultant blend was coextruded with high density polyethylene (HDPE) (DuPont Alathon® 7815) at a die temperature of about 230°C into film of about 76 μm (3 mils) thick using a flat die (63 μm (2.5 mils) of HDPE and 13 μm (0.5 mils) of the remaining components). Peel sample strength was tested. The coextruded films were laminated together in face to face contact at 280 kPa (40 psi) pressure and a dwell time of about 0.5 seconds. After the film was cooled, strips having a unit width of 2.54 cm (1 inch) were cut from the film at locations across its width for testing of the seal strengths. Physical properties are given for the various strips at different temperatures in Table 1 below.

### TABLE 1

| Sealing Temperature °C (°F) | Peel Seal Strength kg/unit width (lb/inch) |
|---|---|
| 127 | 0.36 |
| (260) | (0.80) |
| 138 | 0.82 |
| (280) | (1.81) |
| 149 | 1.11 |
| (300) | (2.46) |
| 160 | 1.69 |
| (320) | (3.73) |

As may be seen from Table 1, the film was tested for seal strength at different sealing temperatures. A satisfactory peel seal value is 0.45 kg/unit width (1.0 lb/in) or above. The results show, quite unexpectedly, that the blend provides a mixture film which has good peel seal strength (a satisfactory peel seal value), good processability (does not adhere to the processing equipment), and will bond by coextrusion or extrusion lamination to a high density polyethylene substrate in a laminar structure without the need for an adhesive to achieve such bonding.

## EXAMPLE 2

Polybutylene (PB 8340) as described in Example 1, was dry blended in a tumbler mixture with 80 weight percent (w%) of EAA (Dow PRIMACOR® 1430) and 5 w% polypropylene (PP 5820).
The resultant blend was coextruded with nylon 6 (Allied Chemical Company CAPRON® 8209F) at a die temperature of about 230°C into film about 89 μm (3.5 mil) thick (76 μm (3.0 mils) of nylon and 13 μm (0.5

mils) of the remaining components).

Peel sample strength was tested. The coextruded films were laminated together in face to face contact at 280 kPa (40 psi) pressure and a dwell time of about 0.5 seconds. After the film was cooled, strips having a unit width of 2.54 cm (one inch) were cut from the film at locations across its width for testing of seal strengths. Physical properties are given for the various strips at different temperatures in Table 2 below.

## TABLE 2

| Sealing Temperature $^{\circ}$C ($^{\circ}$F) | Peel Seal Strength kg/unit width (lb/inch) |
|---|---|
| 160 | 0.13 |
| (320) | (0.29) |
| 171 | 0.42 |
| (340) | (0.92) |
| 182 | 0.566 |
| (360) | (1.25) |
| 193 | 0.734 |
| (380) | (1.62) |

As may be seen from Table 2, the film was tested for seal strength at different sealing temperatures. From this example, it can be seen that the blend provides a film which has a satisfactory peel seal value and good processability and will bond by coextrusion to nylon in a laminar structure without the need for an adhesive tie layer to achieve such bonding.

## Claims

1. A blend suitable for use in packaging film or sheet, which blend comprises
   (i) from 50 to 90 percent by weight of an ethylene-carboxylic acid copolymer;
   (ii) from 5 to 25 percent by weight of a butene-1 polymer; and
   (iii) from 5 to 45 percent by weight of a propylene polymer, the percentages being based on the combined weight of (i), (ii) and (iii).

2. A blend according to claim 1, which comprises from 55 to 70 percent by weight of (i), from 10 to 20 percent by weight of (ii), and from 10 to 35 percent by weight of (iii).

3. A blend according to claim 1 or 2, which comprises about 65 percent by weight of (i), about 15 percent by weight of (ii) and about 20 percent by weight of (iii).

4. A blend according to claim 1, 2 or 3, wherein (i) is an ethylene/acrylic acid copolymer, ethylene/methyl acrylic acid copolymer, ethylene/ethyl acrylic acid copolymer, ethylene/butyl acrylic acid copolymer or ethylene/propyl acrylic acid copolymer.

5. A packaging film or sheet which is capable of forming peel seals and is of a blend as claimed in any one of claims 1 to 4.

6. A packaging film or sheet according to claim 5 which is unoriented or which is biaxially oriented.

7. A laminar structure comprising a substrate to which is bonded a coating layer of a blend as claimed in any one of claims 1 to 4 or a packaging film or sheet as claimed in claim 5 or 6.

8. A laminar structure according to claim 7 wherein the substrate is of nylon, high density polyethylene or aluminium foil.